(19) Europäisches Patentamt
European Patent Office
Office européen des brevets

(11) **EP 4 279 382 B1**

(12) **EUROPEAN PATENT SPECIFICATION**

(45) Date of publication and mention
of the grant of the patent:
**29.10.2025 Bulletin 2025/44**

(21) Application number: **22174684.5**

(22) Date of filing: **20.05.2022**

(51) International Patent Classification (IPC):
**B64C 27/20** (2023.01)  **B64D 27/34** (2024.01)
**B64D 31/06** (2024.01)  **B64D 31/16** (2024.01)
**B64U 50/23** (2023.01)

(52) Cooperative Patent Classification (CPC):
**B64C 27/20; B64D 27/34; B64D 31/06;
B64D 31/16; B64U 50/23**

(54) **METHOD OF CONTROLLING OPERATION OF AN AIRCRAFT AND CONTROL ARRANGEMENT**

VERFAHREN ZUR STEUERUNG DES BETRIEBS EINES FLUGZEUGS UND
STEUERUNGSANORDNUNG

PROCÉDÉ DE COMMANDE DE FONCTIONNEMENT D'UN AÉRONEF ET AGENCEMENT DE
COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.11.2023 Bulletin 2023/47**

(73) Proprietor: **Volocopter Technologies GmbH
76646 Bruchsal (DE)**

(72) Inventors:
• **Wolf, Stephan
76133 Karlsruhe (DE)**
• **Zwiener, Jan
76337 Waldbronn (DE)**
• **Stephan, Johannes
70176 Stuttgart (DE)**

(74) Representative: **Bauer, Marcus
c/o SSM Sandmair
Patentanwälte Rechtsanwalt Partnerschaft mbB
Joseph-Wild-Straße 20
81829 München (DE)**

(56) References cited:
WO-A1-2015/180171   CN-A- 111 752 291
KR-A- 20210 014 830   US-A1- 2019 152 597
US-A1- 2021 216 085   US-B1- 11 091 279

**Description**

The invention relates to a method of controlling operation of an aircraft with a plurality of $n$ rotors, $n \in \mathbb{N}$, and a corresponding plurality of drive units, preferably a vertical take-off and landing aircraft with electrically powered rotors, according to claim 1.

In particular, this can include a method for controlling multirotor propulsion units, taking into account air density variations and torque/power limitations.

Furthermore, the invention relates to a control arrangement for controlling operation of an aircraft that has a plurality of $n$ rotors, $n \in \mathbb{N}$, and a corresponding plurality of drive units, each one of said drive units being associated with a respective one of said plurality of rotors, preferably a vertical take-off and landing aircraft with electrically powered rotors, according to claim 6.

Multirotor aircraft, i.e., aircraft having a plurality of $n$ rotors, $n \in \mathbb{N}$, have a (typically even) number of $n$ lift producing rotors, i.e., airscrews with constant blade pitch, hereafter also simply referred to as rotors. In the prior art, these $n$ rotors are controlled to the desired setpoint speeds by the $n$ drive units (which typically comprise a combination of an electric motor - or an electrical machine - and an inverter). Usually, the $n$ rotor angular speed setpoint values ($\omega$) in radian per second are continuously calculated by a flight control computer (flight control unit) and sent to the drive units to stabilize the attitude and to control the movement of the aircraft.

However, the rotor angular speed setpoints ($\omega$) are only an auxiliary variable for the flight control system, since a certain thrust force ($T$) in Newton (or an equivalent unit of measurement) is expected for a certain rotor angular speed ($\omega$),

which in turn generates a torque ($\tau$) in Newton meter acting on the aircraft, depending on a range of variables, such as the aircraft's moment of inertia, air density, rotor characteristics, external forces (e.g., wind/-gusts), etc.

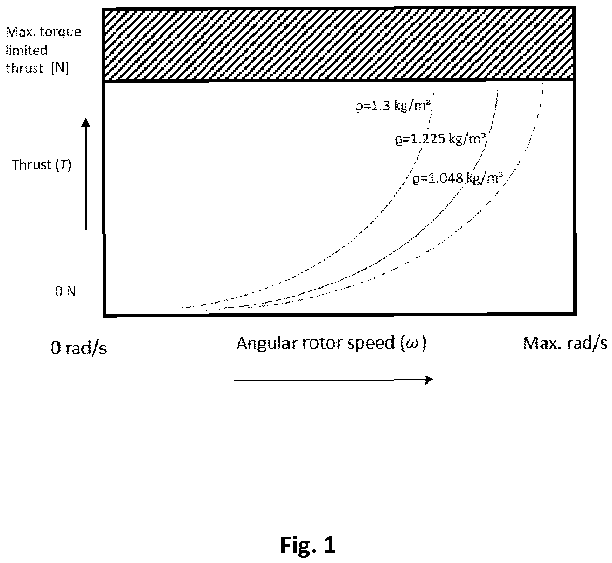

For given rotor angular speed ($\omega$) and air density ($\varrho$), the thrust ($T$) acting on or generated by a given rotor can be expressed as

$$T = c_T(\varrho) \cdot \omega^2$$

using Blade-Element-Momentum Theory, where the thrust coefficient $c_T$ is a function of air density, see Figure 1. Similarly, the rotor drag (D) can be expressed as

$$D = c_D(\varrho) \cdot \omega^2$$

where the drag coefficient $c_D$ is a function of air density as well.

It is typically a valid assumption that the ratio $c_T/c_D$ is constant and independent of the air density, i.e., the ratio of thrust and drag $T/D$ is not a function of air density, either. The above relations apply to an isolated open rotor in hover condition. In forward flight, for example, the power requirement is a function of the rotor inflow speed, reaches a minimum at a certain air speed and additionally depends on the interaction with other (open) rotors and the aircraft structure.

Simply speaking, with the same rotor angular speed ($\omega$), a resulting thrust response ($T$) depends on various parameters (e.g., air density, rotor inflow speed, aerodynamic interaction with neighboring rotors, etc.), which is not optimal from a control point of view and essentially the core of the problem underlying the present invention.

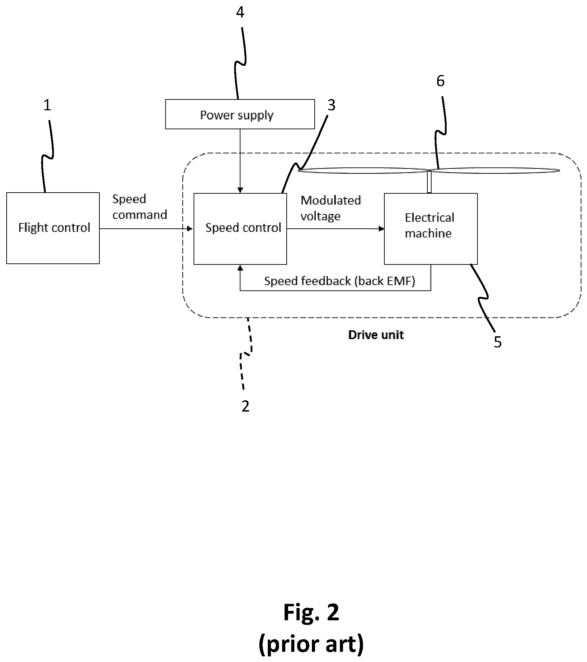

In this way, with a prior art rotor speed command (CMD) interface between flight control and drive unit, as shown in Figure 2 and described in detail further down, the actual thrust, which will result from a given rotor speed CMD, is a function of the air density. For the design of the flight controller, a nominal air density is usually assumed. If the real air density differs from the nominal design air density, this results in a mismatch between the thrust intended by the flight control and the actual thrust.

At the same time, besides air density, the relation between thrust (T) and rotor speed ($\omega$) also depends on other parameters such as the rotor inflow speed, which leads to an additional mismatch.

KR 2021 0014830 A discloses a drone battery management method and an apparatus performing the same, which comprises the features of the preamble of claim 1.

US 11,091,279 B1 discloses a system in an eVTOL aircraft, which system comprises a processor configured to obtain a signal associated with a motor of an aircraft and to determine a motor wear metric based at least in part on the obtained signal by incrementing the motor wear metric at different rates in response to a value of said signal.

WO 2015/180171 A1 discloses control systems and methods for aircraft attitude control. The aircraft attitude control may take physical parameters of the aircraft into account. The control systems may include feedback control systems that involve measuring, with aid of one or more sensors operably coupled to the aircraft, dynamics of the aircraft resulting from actuation of the aircraft's propulsion units and feeding said dynamics to a processor to yield a feedback control scheme that adjusts or confirms a command signal that was issued to said propulsion units.

It is the object of the invention to devise a method of controlling operation of an aircraft with a plurality of $n$ rotors, $n \in \mathbb{N}$, and a corresponding plurality of drive units, preferably a vertical take-off and landing aircraft with electrically powered rotors, which does not have to rely on (model-based) assumptions for various aircraft and/or environmental parameters, thus making the method more precise from a control point of view and avoiding to above-mentioned mismatches.

The same object applies - mutatis mutandis - to a control arrangement for controlling operation of an aircraft that has a plurality of $n$ rotors, $n \in \mathbb{N}$, and a corresponding plurality of drive units, each one of said drive units being associated with a respective one of said plurality of rotors, preferably a vertical take-off and landing aircraft with electrically powered rotors.

This object is achieved by a method having the features of appended claim 1, by a control arrangement (or control assembly) having the features of appended claim 6 and by an aircraft according to claim 13.

Preferred further embodiments of the invention are defined in the sub-claims.

According to a first aspect of the invention, a method of controlling operation of an aircraft with a plurality of $n$ rotors, $n \in \mathbb{N}$, and a corresponding plurality of drive units (or propulsion units), preferably a vertical take-off and landing aircraft with electrically powered rotors, comprises:

a) determining a respective desired resulting thrust setpoint, preferably in Newton or an equivalent unit, for each of said plurality of rotors;
b) directly commanding, by means of a flight control unit, a respective thrust setpoint to a drive unit associated with a given rotor of said plurality of rotors by sending a corresponding thrust command to said drive unit.

In addition, the method according to the invention further comprises controlling aircraft operation by using a cascaded control loop on said drive unit with an outer loop for thrust control and an inner loop for speed control, including: adjusting, by means of a thrust controller, a rotor speed command so that the measured thrust follows a commanded thrust, i.e., a corresponding thrust command.

In order to have a feedback concerning the actual thrust generated by the drive units, i.e., by the corresponding rotors, the thrust in Newton (or any suitable equivalent unit) is measured within the drive or propulsion unit (for example via a strain gauge principle or by means of any other suitable thrust measuring device) and is then further processed as a controlled variable. Based on such

thrust measurement, the angular rotor speed ($\omega$) per drive unit can be continuously adjusted so that the spinning rotor generates a desired thrust ($T$).

Therefore, according to the invention, the method further comprises: c) measuring the thrust ($T$), preferably in Newton or an equivalent unit, within said drive unit, for example by means of a strain gauge measurement; and d) processing said measured thrust ($T$) as a controlled variable.

The invention is however not limited to any particular form or principle of thrust measurement, i.e., any other suitable way of measuring a force or torque ($\tau$) in order to determine the thrust ($T$) can be considered as well.

According to a second aspect of the invention, a control arrangement for controlling operation of an aircraft, which aircraft has a plurality of $n$ rotors, $n \in \mathbb{N}$, and a corresponding plurality of drive units, each one of said drive units being associated with a respective one of said plurality of rotors, preferably a vertical take-off and landing aircraft with electrically powered rotors, comprises: said drive units and said rotors; a flight control unit in operative connection with each one of said drive units; and in each one of said drive units, a thrust controller, a rotor speed controller, an electrical machine (motor) for spinning a corresponding rotor and a thrust measuring device; wherein said thrust controller, said rotor speed controller, said electrical machine and said thrust measuring device are arranged in a cascaded control loop, with an outer loop comprising at least said thrust control, said electrical machine and said thrust measuring device for thrust control and an inner loop comprising at least said speed controller and said electrical machine for rotor speed control.

In a further embodiment of the control arrangement according to the invention, said thrust measuring device comprises a strain gauge or any other suitable thrust measuring device.

In essence, according to the present invention it is not the angular rotor speed ($\omega$) that is decisive from a control point of view, but the thrust ($T$) generated by the rotors and the associated torques ($\tau$) that act on the entire aircraft body. Said aircraft body is assumed here to be rigid to a certain degree, although structural responses and non-rigid behaviour typically have to be considered as well. The target angular rotor speed ($\omega$), as used in the prior art, is a practical but clearly suboptimal interface variable between flight control (or flight control unit) and the drive units. More precisely, using angular rotor speed ($\omega$) may create a mismatch between the thrust ($T$) and torque ($\tau$) commanded by the flight control unit on the one hand and - on the other hand - the thrust ($T$) and torque ($\tau$) realized by the drive units, which are dependent on air density, rotor inflow speed, and aerodynamic rotor interaction. This mismatch can lead to an undesired disturbance of the motion of the aircraft.

The proposed solution is that instead of $n$ rotor angular speed ($\omega$), i.e., corresponding setpoints, the $n$ desired resulting thrust setpoints in Newton (or an equivalent unit) are directly commanded by the flight control unit to the $n$ drive units. This avoids the above-mentioned mismatches in thrust ($T$) and torque ($\tau$) related to the common rotor angular speed ($\omega$) setpoint interface. Note that torque ($\tau$) and thrust ($T$) are proportional and independent of other parameters such as air density, i.e., a thrust setpoint truly avoids both thrust and torque mismatches.

According to the invention, the use of a thrust setpoint as an interface between flight control and propulsion system interface and thrust control on the propulsion side eliminates a mismatch between commanded thrust and realized thrust.

Since thrust $(T)$ and torque $(\tau)$ can be considered proportional with very little error, such interface also eliminates the mismatch between commanded torque and realized torque.

In order to underline the second point once more: the relation between angular speed $(\omega)$ of a rotor on the one hand and thrust $(T)$ and torque $(\tau)$ on the other hand depends on many factors, such as air density and the motion of the aircraft. In comparison, the relation between thrust $(T)$ and torque $(\tau)$ is proportional, i.e., the ratio of thrust to torque is quasi constant, with only very little error. Hence, using thrust $(T)$ commands instead of angular speed $(\omega)$ commands greatly reduces the errors.

In a corresponding embodiment of the control arrangement according to the invention, said flight control unit is therefore operatively connected with said thrust controller and is configured to supply a thrust command to said thrust controller.

Furthermore, any electrical machine, e.g., an electric motor, has a performance limit, which can be expressed in terms of a maximum achievable torque. For a given air density, the maximum achievable motor torque limits the maximum achievable rotor speed. As an example, for a larger air density, a maximum rotor speed that can be reached is lower than in case of a lower air density. Thus, a maximum thrust which is produced at the maximum rotor speed is typically independent of air density although the maximum rotor speed is indeed a function of air density, see Figure 1.

For the design of the flight controller, a nominal air density is usually assumed to derive a nominal maximum rotor speed. However, if the real air density differs from the nominal design air density, this results in a case where (a) the nominal maximum rotor speed cannot be reached if the actual air density is larger than the nominal design air density, or (b) the maximum thrust cannot be reached since the nominal maximum rotor speed is below the actual maximum rotor speed for the given actual air density if the actual air density is lower than the nominal design air density.

In an embodiment of the present invention, which is intended to overcome this particular problem, the flight controller can limit the thrust commands to a maximum achievable thrust, which is independent of the air density. This eliminates the risk of inconsistent limits which typically happens with rotor speed commands, since the actual maximum rotor speed is in fact a function of the air density and thus typically not known to the flight controller.

Therefore, in a preferred embodiment of the method according to the invention said flight control unit limits the thrust command to a maximum thrust that is achievable or that shall not be exceeded by said drive (or propulsion) unit.

As previously indicated, the interface change from rotor angular speed $(\omega)$ setpoint to thrust commands makes the aircraft motion and attitude change deterministic. Flight control does not have to make any assumptions about the forces generated and does not have to rely on any average models. Thus, no measurement or estimation of ambient air density is necessary which in effect simplifies the solution at the control level.

An advantageous further embodiment of the method according to the invention comprises: continuously adjusting, based on said thrust measurement, an angular rotor speed $(\omega)$ of said drive unit so that the desired thrust $(T)$ is generated by the corresponding rotor.

In order to implement said general concept, a highly preferred embodiment of the invention may comprise a cascaded control loop in the drive unit with an outer loop for thrust control and an inner loop for speed control, respectively. A thrust controller may adjust the speed command in such a way that a measured thrust follows the commanded thrust. To achieve this, the thrust controller can either use a simple control logic, like PI or PID control, or can deploy an air density estimator to effectively eliminate the effect of air density from the control loop. In the latter case, the air density can be observed (i.e., estimated) by comparing a commanded rotor speed with the measured thrust.

In a further embodiment of the control arrangement according to the invention, the thrust controller may be operatively connected with said speed controller and with said thrust measuring device, respectively, and may be configured to supply a rotor speed command to said speed controller and to receive a measured thrust signal from said thrust measuring device, respectively, which speed command is adjusted so that the measured thrust, based on said measured thrust signal, follows the commanded thrust according to said thrust command. This corresponds to the above-mentioned outer (control) loop.

In yet a further embodiment of the control arrangement according to the invention, said rotor speed controller may be operatively connected with said electrical machine and may be configured to supply a modulated voltage signal to said electrical machine and to receive a rotor speed feedback signal from said electrical machine. This corresponds to the above-mentioned inner (control) loop.

As already stated above, in another embodiment of the method according to the invention said step of adjusting said rotor speed command may comprises: i) either using, in said thrust controller, a simple control logic, e.g., a PI or PID control logic, that is well known as such; or ii) estimating an air density, by deploying an air density estimator, to compensate an effect of current air density from the control loop.

In a corresponding further embodiment of the control arrangement according to the invention, said thrust controller may comprise either a simple control logic, e.g., a PI or PID control logic, or may comprise an air density estimator, which air density estimator is configured to compensate the effect of air density from the control loop.

If applicable, case ii) may comprise observing or estimating, by means of said air density estimator, the air density by comparing said rotor speed command with said measured thrust. In this way, the invention does not have to rely on any fixed nominal value.

In a corresponding further embodiment of the control arrangement according to the invention, in the latter case (case ii)), said air density estimator may be configured to derive an air density by comparing a commanded rotor speed with the measured thrust, i.e., said rotor speed command with said measured thrust signal.

Preferably, a control arrangement in accordance with the present invention can be used to devise an improved aircraft with a plurality of $n$ rotors, $n \in \mathbb{N}$, and a corresponding plurality of drive units, preferably a vertical take-off and landing aircraft with electrically powered rotors.

Further advantages and characteristics of the invention will now be described by way of example with reference to preferred embodiments as shown in the drawings.

Figure **1** shows the relationship between thrust $T$ [N] and angular rotor speed ($\omega$) for different values of ambient air density $\varrho$ [kg/m³];

Figure 2 shows a control method and arrangement according to the prior art;

Figure 3 shows a control method and arrangement according to an embodiment of the present invention;

Figure 4 shows an aircraft operated according to the present invention; and

Figure 5 shows a drive unit as used in embodiments of the present invention.

Figure 1 shows the relationship between the angular speed ($\omega$) of the rotor of a drive unit (abscissa; unit: rad/s) and the resulting thrust ($T$) (ordinate), whereby the thrust ($T$) is given in the unit Newton (N). The above relationship is shown for three different values of the ambient air density, which is given in the unit kilogram per cubic metre. As can be seen from the drawing, the corresponding curves are increasingly steep for increasing angular speeds ($\omega$), whereby the achievable maximum angular speed increases with decreasing air density.

The shaded area indicates a range that the drive unit cannot reach in practice due to its inherently limited torque. This range is independent of the air density, but is reached for different angular speeds depending on the actual air density.

Figure 2 schematically shows a control system or control arrangement according to the state of the art. A flight control unit 1 sends a control command concerning the rotor speed of a drive unit 2 (rotor speed command) to a corresponding speed controller 3 of the said drive unit 2. This is equivalent to providing rotor speed command (CMD) interface between flight control unit 1 and drive unit 2. Said speed controller 3 is connected to a power supply 4. The speed controller 3 sends a corresponding modulated voltage signal to an electrical machine 5, i.e., an electrical motor of the drive unit 2, which electrical machine 5 is operatively connected to a rotor 6 in order to drive or rotate (spin) the rotor 6.

In order to form a closed control loop, the electrical machine 5 sends a speed feedback signal back to the speed controller 3.

The design according to Figure 2 has various disadvantages, as described in detail in the general part of the description.

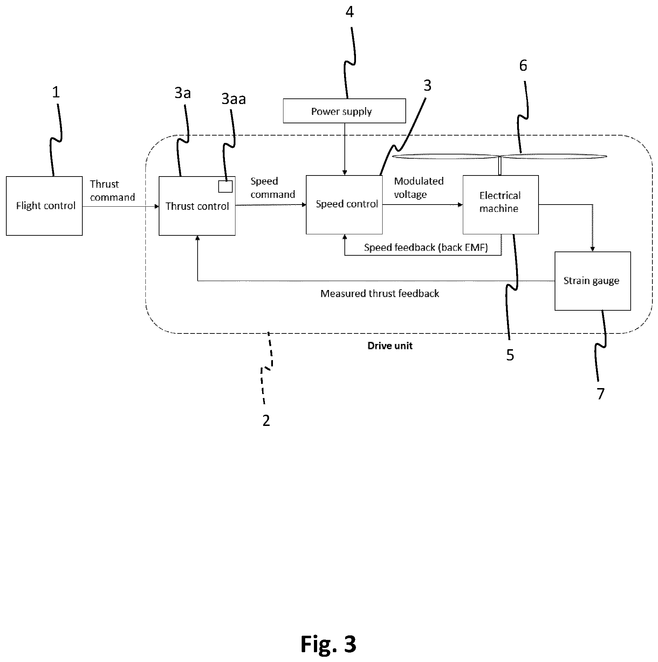

Figure 3 shows a control method or a control architecture according to one embodiment of the present invention. The same reference numerals as in Figure 2 are used for elements that are identical or have at least the same function.

According to Figure 3, the flight control unit 1 sends a thrust control command ("thrust command") to a thrust controller 3a contained in the drive unit (or propulsion unit) 2. As previously indicated, this involves an interface change from rotor angular speed ($\omega$) setpoint to thrust commands, which makes the aircraft motion and attitude change deterministic. The thrust controller 3a translates the thrust control command into a speed control command ("speed command") and sends it to the speed controller 3. The speed controller 3 sends a corresponding modulated voltage signal ("modulated voltage") to the electrical machine 5, i.e., an electrical motor of the drive unit 2, which electrical machine 5 is operatively connected to rotor 6 in order to drive or rotate (spin) the rotor 6. An inner control circuit comprising the speed controller 3 and the electrical machine 5 is essentially unchanged from the prior art. Thus, in order to form a closed control loop, the electrical machine 5 sends a speed feedback signal ("speed feedback (back EMF))" back to the speed controller 3.

In particular, the flight control unit 1 can be devised for determining a respective desired resulting thrust setpoint, preferably in Newton or any suited equivalent unit, for each of said plurality of rotors, and for directly commanding a respective thrust setpoint to the drive unit 2 associated with a given rotor 6 of said plurality of rotors 6 by sending a corresponding thrust control command to said drive unit 2.

The flight control unit 1 can limit the thrust commands to the maximum thrust that is achievable (or shall not be exceeded) by drive unit 2, which thrust (T) is independent of the air density (cf. Figure 1). This eliminates the risk of inconsistent limits which typically happens with prior art rotor speed commands, since

the actual maximum rotor speed is a function of the air density and thus typically not known to the flight control unit 1.

In addition, the electrical machine 5 is operatively connected to a thrust measuring device in the form of a strain gauge unit 7, which strain gauge unit 7 is additionally operatively connected to the thrust controller 3a, so that an additional outer control circuit is formed which comprises at least the electrical machine 5, the strain gauge unit 7 and the thrust controller 3a. The strain gauge unit 7 measures a thrust (T) generated by the electrical machine 5 or the rotor 6 and couples a corresponding signal ("measured thrust feedback") back to the thrust controller 3a. In this way, said measured thrust (T) is processed as a controlled variable.

As the skilled person easily recognises, the strain measuring unit 7 is only an exemplary way to measure the generated thrust (T). The present invention is by no means limited to such an arrangement.

In this way, the control architecture of Figure 3 comprises a cascaded control loop on the drive unit 2 with said outer control loop for thrust control and said inner control loop for speed control. The thrust controller 3a adjusts the speed commands in such a way that a measured thrust follows the commanded thrust. For to achieve this, the thrust controller 3a can either use a simple control logic, like a PI or PID control, or can deploy an air density estimator (cf. reference numeral 3aa) to effectively eliminate the effect of air density from the control loop. In the latter case, the air density can be observed (i.e., estimated) by comparing a commanded rotor speed with the measured thrust (T) in said thrust controller 3a by means of said air density estimator 3aa.

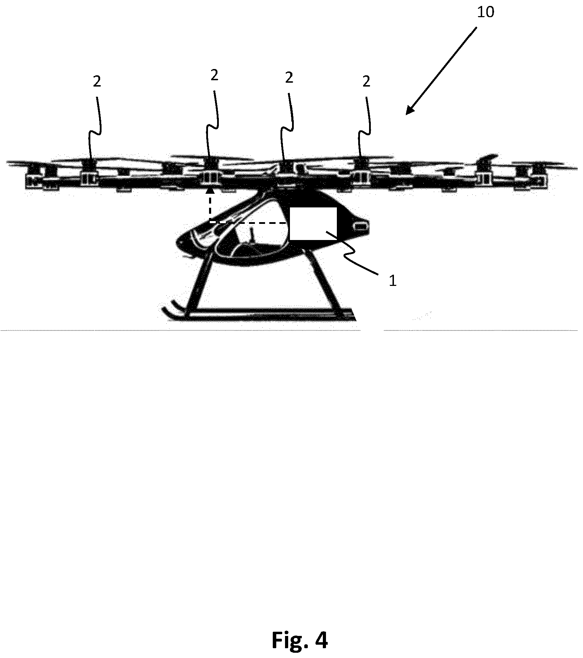

Figure 4 illustrates a preferred use or application of the method or control arrangement according to the invention. A multi-rotor aircraft 10 with a plurality of $n$ rotors, $n \in \mathbb{N}$, and a corresponding plurality of electrically powered electric drive units 2 is shown in the form of a vertical take-off and landing aircraft, which drive units 2 are basically designed as shown in Figure 3. At reference numeral 1, the aircraft 10 comprises the flight control unit already mentioned in connection with Figure 3, which sends the corresponding control commands (thrust control commands) to the individual drive units 2. For the sake of clarity, this is only shown graphically for a single drive unit 2 in Figure 4.

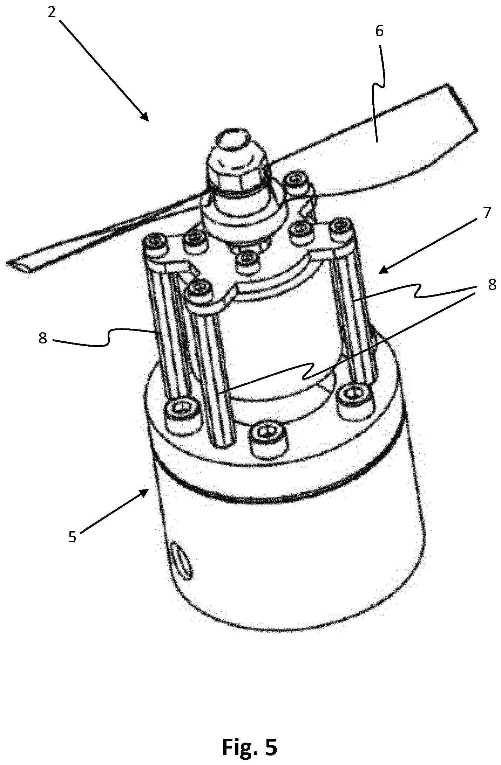

Finally, Figure 5 shows a possible design of a drive unit 2 or of the electrical machine 5 with rotor 6, as it can be used in practice in an implementation of the present invention.

By way of example, reference numeral 8 shows strain measuring gauges as components of the above-mentioned strain measuring unit 7, with the aid of which a thrust (T) generated by the electrical machine 5 and/or the rotor 6 can be measured. Subsequently, a corresponding signal can be fed back to the thrust controller 3a (compare Figure 3).

## Claims

1. A method of controlling operation of an aircraft (10) with a plurality of $n$ rotors (6), $n \in \mathbb{N}$, and a corresponding plurality of drive units (2), preferably a vertical take-off and landing aircraft (10) with electrically powered rotors (6), comprising:

   a) determining a respective desired resulting thrust setpoint, preferably in Newton (N) or an equivalent unit, for each of said plurality of rotors (6);
   b) directly commanding, by means of a flight control unit (1), a respective thrust setpoint to a drive unit (2) associated with a given rotor (6) of said plurality of rotors (6) by sending a corresponding thrust command to said drive unit (2);
   c) measuring a thrust (T), preferably in Newton (N) or an equivalent unit, within said drive unit (2); and
   d) processing said measured thrust (T) as a controlled variable;

   **characterized by**
   controlling said operation by using a cascaded control loop in said drive unit (2) with an outer loop for thrust control and an inner loop for speed control, including:
   adjusting, by means of a thrust controller (3a), a rotor speed command so that the measured thrust (T) follows a commanded thrust.

2. The method of claim 1, wherein said flight control unit (1) limits the thrust command to a maximum thrust that is achievable or that shall not be exceeded by said drive unit (2).

3. The method of claim 1 or 2, comprising:
   continuously adjusting, based on said thrust (T) measurement, an angular rotor speed ($\omega$) of said drive unit (2) so that the desired thrust is generated by the corresponding rotor (6).

4. The method of any one of claims 1 to 3, wherein said step of adjusting said rotor speed command comprises:

   i) either using, in said thrust controller (3a), a simple control logic, e.g., a PI or PID control logic;
   ii) or estimating an air density, by deploying an air density estimator (3aa), to compensate an effect of current air density from the control loop.

5. The method of claim 4, wherein case ii) comprises observing or estimating the air density by comparing said rotor speed command with said measured thrust ($T$).

6. A control arrangement for controlling operation of an aircraft (10), said aircraft (10) having a plurality of $n$ rotors (6), $n \in \mathbb{N}$, and a corresponding plurality of drive units (2), each one of said drive units (2) being associated with a respective one of said plurality of rotors (6), preferably a vertical take-off and landing aircraft (10) with electrically powered rotors (6), said control arrangement comprising:

said rotors (6) and drive units (2);
a flight control unit (1) in operative connection with each one of said drive units (2); and
in each one of said drive units (2), a thrust controller (3a), a rotor speed controller (3), an electrical machine (5) for spinning a corresponding rotor (6) and a thrust measuring device (7); **characterised in that** said thrust controller (3a), said rotor speed controller (3), said electrical machine (5) and said thrust measuring device (7) are arranged in a cascaded control loop, with an outer loop comprising at least said thrust controller (3a), said electrical machine (5) and said thrust measuring device (7) for thrust ($T$) control and an inner loop comprising at least said speed controller (3) and said electrical machine (5) for rotor speed ($\omega$) control.

7. The control arrangement of claim 6, wherein said flight control unit (1) is operatively connected with said thrust controller (3a) and is configured to supply a thrust command to said thrust controller (3a).

8. The control arrangement of claim 6 or 7, wherein the thrust controller (3a) is operatively connected with said speed controller (3) and with said thrust measuring device (7) and is configured to supply a rotor speed command to said speed controller (3) and to receive a measured thrust ($T$) signal from said thrust measuring device (7), respectively, which speed command is adjusted so that the measured thrust ($T$), based on said measured thrust signal, follows the commanded thrust according to said thrust command.

9. The control arrangement of any one of claims 6 through 8, wherein said rotor speed controller (3) is operatively connected with said electrical machine (5) and is configured to supply a modulated voltage signal to said electrical machine (5) and to receive a rotor speed feedback signal from said electrical machine (5).

10. The control arrangement of any one of claims 6 through 9, wherein said thrust controller (3a) comprises either a simple control logic, e.g., a PI or PID control logic, or comprises an air density estimator (3aa), which air density estimator (3aa) is configured to compensate the effect of air density from the control loop.

11. The control arrangement of claim 10, wherein, in the latter case, said air density estimator (3aa) is configured to derive an air density by comparing a commanded rotor speed with the measured thrust ($T$), i.e., by comparing said rotor speed command with said measured thrust signal.

12. The control arrangement of any one of claims 6 through 11, wherein said thrust measuring device (7) comprises a strain gauge (8).

13. An aircraft (10) with a plurality of $n$ rotors (6), $n \in \mathbb{N}$, and a corresponding plurality of drive units (2), preferably a vertical take-off and landing aircraft (10) with electrically powered rotors (6), said aircraft (10) comprising the control arrangement of any one of claims 6 through 12.

**Patentansprüche**

1. Verfahren zur Flugsteuerung eines Flugzeugs (10) mit einer Vielzahl von $n$ Rotoren (6), $n \in \mathbb{N}$, und einer entsprechenden Vielzahl von Antriebseinheiten (2), vorzugsweise eines vertikal startenden und landenden Flugzeugs (10) mit elektrisch angetriebenen Rotoren (6), umfassend:

a) Bestimmen eines jeweiligen gewünschten resultierenden Schub-Sollwerts, vorzugsweise in Newton (N) oder einer gleichwertigen Einheit, für jeden der mehreren Rotoren (6);
b) direktes Kommandieren eines jeweiligen Schub-Sollwerts an eine Antriebseinheit (2), die einem bestimmten Rotor (6) der mehreren Rotoren (6) zugeordnet ist, mittels einer Flugsteuerungseinheit (1) durch Senden eines entsprechenden Schubbefehls an die Antriebseinheit (2);
c) Messen eines Schubs ($T$), vorzugsweise in Newton (N) oder einer gleichwertigen Einheit, innerhalb der Antriebseinheit (2); und
d) Verarbeiten des gemessenen Schubs ($T$) als Regelgröße,

**dadurch gekennzeichnet, dass**

die Flugsteuerung unter Verwendung einer kaskadierten Regelschleife in der Antriebseinheit (2) mit einer äußeren Schleife zur Schubsteuerung und einer inneren Schleife zur Drehzahlsteuerung, einschließlich der Anpassung eines Rotordrehzahlbefehls mittels eines Schubreglers (3a), erfolgt, so dass der gemessene Schub ($T$) einem kommandierten Schub folgt.

2. Verfahren nach Anspruch 1, wobei die Flugsteuerungseinheit (1) den Schubbefehl auf einen maximal erreichbaren Schub begrenzt oder einen maximalen Schub begrenzt, der von der Antriebseinheit (2) nicht überschritten werden darf.

3. Verfahren nach Anspruch 1 oder 2, umfassend: kontinuierliches Anpassen einer Winkelrotordrehzahl ($\omega$) der Antriebseinheit (2) basierend auf dem gemessenen Schub ($T$), so dass der gewünschte Schub durch den entsprechenden Rotor (6) erzeugt wird.

4. Verfahren nach einem der Ansprüche 1 bis 3, wobei der Schritt der Anpassung des Rotordrehzahlbefehls umfasst:

    i) entweder Verwenden einer einfachen Steuerlogik in dem Schubregler (3a), z. B. einer PI- oder PID-Steuerlogik;
    ii) oder Schätzen einer Luftdichte durch Einsatz eines Luftdichteschätzers (3aa), um einen Effekt der aktuellen Luftdichte aus dem Regelkreis zu kompensieren.

5. Verfahren nach Anspruch 4, wobei Fall ii) das Beobachten oder Schätzen der Luftdichte durch Vergleichen des Rotordrehzahlbefehls mit dem gemessenen Schub ($T$) umfasst.

6. Steuerungsanordnung zur Flugsteuerung eines Flugzeugs (10), wobei das Flugzeug (10) eine Vielzahl von $n$ Rotoren (6), $n \in N$, und eine entsprechende Vielzahl von Antriebseinheiten (2) aufweist, wobei jede der Antriebseinheiten (2) einem entsprechenden Rotor (6) aus der Vielzahl von Rotoren (6) zugeordnet ist, vorzugsweise eines senkrecht startenden und landenden Flugzeugs (10) mit elektrisch angetriebenen Rotoren (6), die Steuervorrichtung umfassend:

    die vorgenannten Rotoren (6) und Antriebseinheiten (2);
    eine Flugsteuerungseinheit (1), die in Wirkverbindung mit jeder der Antriebseinheiten (2) steht; und
    in jeder der Antriebseinheiten (2), einen Schubregler (3a), einen Rotordrehzahlregler (3), eine elektrische Maschine (5) zum Drehen des entsprechenden Rotors (6) und eine Schubmessvorrichtung (7);
    **dadurch gekennzeichnet, dass**
    der Schubregler (3a), der Rotordrehzahlregler (3), die elektrische Maschine (5) und die Schubmessvorrichtung (7) in einem kaskadierten Regelkreis angeordnet sind, wobei der kaskadierte Regelkreis zur Regelung des Schubs ($T$) einen äußerer Regelkreis mit mindestens dem Schubregler (3a), der elektrischen Maschine (5) und der Schubmessvorrichtung (7) umfasst, und zur Regelung der Rotordrehzahl ($\omega$) einen innerer Regelkreis mit mindestens dem Drehzahlregler (3) und der elektrische Maschine (5) umfasst.

7. Steuerungsanordnung nach Anspruch 6, wobei die Flugsteuerungseinheit (1) funktional mit dem Schubregler (3a) verbunden ist und dazu ausgebildet ist, einen Schubbefehl an den Schubregler (3a) bereitzustellen.

8. Steuerungsanordnung nach Anspruch 6 oder 7, wobei der Schubregler (3a) funktional mit dem Drehzahlregler (3) und mit der Schubmessvorrichtung (7) verbunden ist und dazu ausgebildet ist, einen Rotordrehzahlbefehl an den Drehzahlregler (3) bereitzustellen und ein von der Schubmessvorrichtung (7) jeweils gemessenes Schubsignal ($T$) zu empfangen, wobei der Drehzahlbefehl so angepasst wird, dass der gemessene Schub ($T$), basierend auf dem gemessenen Schubsignal, dem gemäß dem Schubbefehl kommandierten Schub folgt.

9. Steuerungsanordnung nach einem der Ansprüche 6 bis 8, wobei der Rotordrehzahlregler (3) funktional mit der elektrischen Maschine (5) verbunden ist und dazu ausgebildet ist, ein moduliertes Spannungssignal an die elektrische Maschine (5) abzugeben und ein Rotordrehzahl-Feedbacksignal von der elektrischen Maschine (5) zu empfangen.

10. Steuerungsanordnung nach einem der Ansprüche 6 bis 9, wobei der Schubregler (3a) entweder eine einfache Steuerlogik, beispielsweise eine PI- oder PID-Steuerlogik, oder einen Luftdichteschätzer (3aa) aufweist, wobei der Luftdichteschätzer (3aa) dazu ausgebildet ist, den Einfluss der Luftdichte aus dem Regelkreis zu kompensieren.

11. Steuerungsanordnung nach Anspruch 10, wobei im letzteren Fall der Luftdichteschätzer (3aa) dazu ausgebildet ist, eine Luftdichte aus dem Vergleichen einer vorgegebenen Rotordrehzahl mit dem gemessenen Schub ($T$) abzuleiten, beispielsweise durch Vergleichen des Rotordrehzahlbefehls mit dem gemessenen Schubsignal.

**12.** Steuerungsanordnung nach einem der Ansprüche 6 bis 11, wobei die Schubmessvorrichtung (7) einen Dehnmessstreifen (8) aufweist.

**13.** Flugzeug (10) mit einer Vielzahl von *n* Rotoren (6), *n* € *N,* und einer entsprechenden Vielzahl von Antriebseinheiten (2), vorzugsweise ein senkrecht startendes und landendes Flugzeug (10) mit elektrisch angetriebenen Rotoren (6), wobei das Flugzeug (10) die Steuerungsanordnung nach einem der Ansprüche 6 bis 12 aufweist.

**Revendications**

**1.** Procédé de commande de fonctionnement d'un aéronef (10) doté d'une pluralité de *n* rotors (6), $n \in \mathbb{N}$, et d'une pluralité correspondante d'unités d'entraînement (2), de préférence un aéronef (10) à décollage et atterrissage verticaux doté de rotors (6) alimentés électriquement, comprenant:

a) la détermination d'un point de consigne de poussée résultant souhaité respectif, de préférence en Newton (N) ou une unité équivalente, pour chacun de ladite pluralité de rotors (6);
b) l'instruction directe, au moyen d'une unité de commande de vol (1), d'un point de consigne de poussée respectif à une unité d'entraînement (2) associée à un rotor (6) donné de ladite pluralité de rotors (6) en envoyant une instruction de poussée correspondante à ladite unité d'entraînement (2);
c) la mesure d'une poussée (*T*), de préférence en Newton (N) ou une unité équivalente, au sein de ladite unité d'entraînement (2); et
d) le traitement de ladite poussée mesurée (*T*) en guise de variable commandée ;

**caractérisé par**
la commande dudit fonctionnement à l'aide d'une boucle de commande en cascade dans ladite unité d'entraînement (2) avec une boucle extérieure pour la commande de poussée et une boucle intérieure pour la commande de vitesse, comportant: l'ajustement, au moyen d'un dispositif de commande de poussée (3a), d'une instruction de vitesse de rotor de sorte que la poussée mesurée (*T*) suit une poussée instruite.

**2.** Procédé selon la revendication 1, dans lequel ladite unité de commande de vol (1) limite l'instruction de poussée à une poussée maximale qui peut être atteinte ou qui ne doit pas être dépassée par ladite unité d'entraînement (2).

**3.** Procédé selon la revendication 1 ou 2, comprenant:

l'ajustement en continu, en fonction de ladite mesure de poussée (*T*), d'une vitesse de rotor angulaire (*ω*) de ladite unité d'entraînement (2) de sorte que la poussée souhaitée est générée par le rotor (6) correspondant.

**4.** Procédé selon l'une quelconque des revendications 1 à 3, dans lequel ladite étape consistant à ajuster ladite instruction de vitesse de rotor comprend:

i) soit l'utilisation, dans ledit dispositif de commande de poussée (3a), d'une logique de commande simple, par ex., une logique de commande PI ou PID;
ii) soit l'estimation d'une densité d'air, en déployant un estimateur de densité d'air (3aa), pour compenser un effet de densité d'air actuelle à partir de la boucle de commande.

**5.** Procédé selon la revendication 4, dans lequel un cas ii) comprend l'observation ou l'estimation de la densité d'air en comparant ladite instruction de vitesse de rotor avec ladite poussée mesurée (*T*).

**6.** Agencement de commande pour la commande du fonctionnement d'un aéronef (10), ledit aéronef (10) ayant une pluralité de *n* rotors (6), $n \in \mathbb{N}$, et une pluralité correspondante d'unités d'entraînement (2), chacune desdites unités d'entraînement (2) étant associée à un rotor respectif parmi ladite pluralité de rotors (6), de préférence un aéronef (10) à décollage et atterrissage verticaux doté de rotors (6) alimentés électriquement, ledit agencement de commande comprenant:

lesdits rotors (6) et unités d'entraînement (2);
une unité de commande de vol (1) en connexion opérationnelle avec chacune parmi lesdites unités d'entraînement (2); et
dans chacune parmi lesdites unités d'entraînement (2), un dispositif de commande de poussée (3a), un dispositif de commande de vitesse de rotor (3), une machine électrique (5) pour faire tourner un rotor (6) correspondant et un dispositif de mesure de poussée (7);
**caractérisé en ce que**
ledit dispositif de commande de poussée (3a), ledit dispositif de commande de vitesse de rotor (3), ladite machine électrique (5) et ledit dispositif de mesure de poussée (7) sont agencés dans une boucle de commande en cascade, dotée d'une boucle extérieure comprenant au moins ledit dispositif de commande de poussée (3a), ladite machine électrique (5) et ledit dispositif de mesure de poussée (7) pour la commande de poussée (*T*) et une boucle intérieure comprenant au moins ledit dispositif de commande de vitesse (3) et ladite machine électrique (5) pour la commande de vitesse de rotor ($\omega$).

7. Agencement de commande selon la revendication 6, dans lequel ladite unité de commande de vol (1) est connectée de manière opérationnelle audit dispositif de commande de poussée (3a) et est configurée pour fournir une instruction de poussée audit dispositif de commande de poussée (3a).

8. Agencement de commande selon la revendication 6 ou 7, dans lequel le dispositif de commande de poussée (3a) est connecté de manière opérationnelle audit dispositif de commande de vitesse (3) et audit dispositif de mesure de poussée (7) et est configuré pour fournir une instruction de vitesse de rotor audit dispositif de commande de vitesse (3) et pour recevoir un signal de poussée mesurée ($T$) à partir dudit dispositif de mesure de poussée (7), respectivement, laquelle instruction de vitesse est ajustée de sorte que la poussée mesurée ($T$), en fonction dudit signal de poussée mesurée, suit la poussée instruite selon ladite instruction de poussée.

9. Agencement de commande selon l'une quelconque des revendications 6 à 8, dans lequel ledit dispositif de commande de vitesse de rotor (3) est connecté de manière opérationnelle à ladite machine électrique (5) et est configuré pour fournir un signal de tension modulé à ladite machine électrique (5) et pour recevoir un signal de retour de vitesse de rotor à partir de ladite machine électrique (5).

10. Agencement de commande selon l'une quelconque des revendications 6 à 9, dans lequel ledit dispositif de commande de poussée (3a) comprend soit une logique de commande simple, par ex., une logique de commande PI ou PID, soit comprend un estimateur de densité d'air (3aa), lequel estimateur de densité d'air (3aa) est configuré pour compenser l'effet de densité d'air à partir de la boucle de commande.

11. Agencement de commande selon la revendication 10, dans lequel, dans ce dernier cas, ledit estimateur de densité d'air (3aa) est configuré pour déduire une densité d'air en comparant une vitesse de rotor instruite avec la poussée mesurée ($T$), c. -à-d., en comparant ladite instruction de vitesse de rotor avec ledit signal de poussée mesurée.

12. Agencement de commande selon l'une quelconque des revendications 6 à 11, dans lequel ledit dispositif de mesure de poussée (7) comprend une jauge de contrainte (8).

13. Aéronef (10) doté d'une pluralité de $n$ rotors (6), $n \in \mathbb{N}$, et d'une pluralité correspondante d'unités d'entraînement (2), de préférence un aéronef (10) à décollage et atterrissage verticaux doté de rotors (6) alimentés électriquement, ledit aéronef (10) comprenant l'agencement de commande selon l'une quelconque des revendications 6 à 12.

**Fig. 1**

**Fig. 2
(prior art)**

1

3a    3aa                    4                    3            6

Power supply

| Flight control | Thrust command → | Thrust control | Speed command → | Speed control | Modulated voltage → | Electrical machine |

Speed feedback (back EMF)

Measured thrust feedback

Strain gauge

**Drive unit**

2                                                        5

7

# Fig. 3

**Fig. 4**

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20210014830 A
- US 11091279 B1
- WO 2015180171 A1